# EUROPÄISCHE PATENTSCHRIFT

(11) **EP 2 834 580 B1**
(45) Veröffentlichungstag und Bekanntmachung des Hinweises auf die Patenterteilung: **14.08.2019**
(21) Anmeldenummer: 13720967.2
(22) Anmeldetag: 08.05.2013
(51) Int. Cl.: F27B 17/02, A61C 13/20, F27D 19/00, F27D 21/00

(54) **BRENNOFEN UND VERFAHREN ZUM BETRIEB EINES BRENNOFENS**
FURNACE AND METHOD FOR OPERATING A FURNACE
FOUR DENTAIRE ET PROCÉDÉ DE FONCTIONNEMENT D'UN FOUR

(30) Priorität: 11.05.2012 DE 102012207897
(43) Veröffentlichungstag der Anmeldung: 11.02.2015
(73) Patentinhaber: Redios-Tec GmbH, 83395 Freilassing (DE)
(72) Erfinder: MILLER, Stephan, 83278 Traunstein (DE)
(74) Vertreter: Manitz Finsterwald Patent- und Rechtsanwaltspartnerschaft mbB
(86) Internationale Anmeldenummer: PCT/EP2013/059626
(87) Internationale Veröffentlichungsnummer: WO 2013/167676

(56) Entgegenhaltungen:
- EP-A1- 2 058 616
- DE-A1- 4 340 200
- DE-A1- 19 824 497
- US-A- 6 157 004

## Beschreibung

Die vorliegende Erfindung betrifft ein Verfahren zum Betrieb eines Brennofens zum Brennen von Brenngut, insbesondere Dentalkeramik und einen entsprechenden Brennofen.

Die DE 43 40 200 A1 beschreibt, einen Brennofen mit zwei Steuereinheiten auszustatten, die von unterschiedlich ausgebildeten und erfahrenen Personen genutzt werden können. Beispielsweise kann die erste Steuereinheit eine freie Programmierung von Brennprozessen ermöglichen, während die zweite Steuereinheit die Abfolge der Brennschritte fest vorgibt.

Die US 6,157,004 A widmet sich Maßnahmen zur Verbesserung der Qualität des Brennguts.

Die DE 198 24 497 A1 stellt Maßnahmen zur Verbesserung der Brennergebnisse sowie zur Erhöhung des Bedienkomforts vor. Der offenbarte Brennofen weist Steuermittel und Programmierungseinrichtungen auf, durch die die Brennobjekttemperatur, die Anstiegsrate oder -zeit auf diese Temperatur, die Haltezeit dieser Temperatur und der Unterdruck in der Brennkammer einstellbar sind.

Die EP 2 058 616 A1 stellt sich die Aufgabe, eine verbesserte Bedienungssicherheit eines Brennofens mit einer höheren Flexibilität zu verbinden. Zu diesem Zweck weist eine Steuereinrichtung des offenbarten Brennofens ein Paketmodul auf, durch das Ofendaten wie beispielsweise Brennparameter oder Daten zu den Dentalersatzteilen und/oder Zähnen der Patienten übertragen werden können.

Der Brennofen umfasst eine Steuereinheit zur Steuerung des Brennofens. Die Steuereinheit weist einen Freigabeabschnitt auf, der mittels einer individualisierten Steueranweisung, insbesondere mittels eines verschlüsselten Aktivierungscodes, aktivierbar ist. Der Freigabeabschnitt ist derart ausgestaltet, dass in einem aktivierten Zustand des Freigabeabschnitts die Durchführung eines oder mehrerer Brennprozesse möglich ist und dass in einem nicht aktivierten Zustand des Freigabeabschnitts die Durchführung eines Brennprozesses nicht möglich ist.

Beispielsweise wird durch den Freigabeabschnitt sichergestellt, dass nur ein dazu berechtigter Nutzer den Brennofen betreiben kann. Insbesondere gestattet der Freigabeabschnitt auch in einem nicht aktivierten Zustand zwar einen zumindest teilweisen Betrieb der Steuereinheit, eine Durchführung eines Brennprozesses wird jedoch in diesem Zustand unterbunden.

Die Steueranweisung enthält eine gerätespezifische Information, so dass sie nur bei einem bestimmten Brennofen eine Aktivierung des Freigabeabschnitts bewirkt. Denkbar ist beispielsweise, dass die Steueranweisung eine eindeutige Gerätekennzeichnung enthält oder einen eindeutigen Bezug auf diese nimmt. Dadurch wird zuverlässig verhindert, dass eine für ein bestimmtes Gerät vorgesehene Steueranweisung unberechtigter- oder unbeabsichtigterweise bei einem anderen Brennofen verwendet wird.

Die Steueranweisung umfasst eine Information bezüglich einer vorbestimmten Anzahl freigegebener Brennprozesse. Mit anderen Worten enthält die Steueranweisung einen Hinweis darauf, wie viele Brennprozesse durch den Aktivierungscode freigegeben werden sollen. Beispielsweise ist in dem Freigabeabschnitt eine manipulationssichere Zählvariable vorgesehen, die durch die Steueranweisung auf einen vorbestimmten Wert gesetzt wird und die bei jedem Brennprozess dekrementiert wird.

Die Steueranweisung legt mit der Zählvariable in dem Freigabeabschnitt somit eine Art Guthaben fest. Im einfachsten Fall wird unabhängig von beispielsweise der Dauer und/oder dem Temperaturprofil des Brennprozesses jeweils ein fester Wert von der Zählvariable abgezogen, bis das Guthaben aufgebraucht ist und der Freigabeabschnitt deaktiviert wird. Es ist jedoch auch möglich, das Guthaben prozessparameterabhängig zu reduzieren. D.h. die Zählvariable wird beispielsweise in Abhängigkeit der Dauer, der erreichten Maximaltemperatur, eines das Temperaturprofil widerspiegelnden Parameters und/oder unter Berücksichtigung anderer Prozessparameter unterschiedlich stark verändert. Dementsprechend wäre es dann möglich, mit einem gewissen Guthaben, eine größere Anzahl von kürzeren Brennprozessen durchzuführen als lange Brennprozesse.

Der Steueranweisung kann die Informationen in beliebiger Form - auch verschlüsselt in Form eines Codes - enthalten. Gemäß einer Ausführungsform ist die Steuereinheit derart mit einem Datenfernübertragungsnetz verbindbar, dass die Steueranweisung dem Freigabeabschnitt über das Datenfernübertragungsnetz zuführbar ist.

Alternativ oder zusätzlich kann die Steuereinheit eine Bildleseeinheit aufweisen, mit der ein die Steueranweisung umfassendes Muster erfassbar ist und mit der die Steueranweisung aus dem Muster extrahierbar ist. Die Bildleseeinheit umfasst insbesondere eine Kamera oder einen Scanner.

Beispielsweise ist die Bildleseeinheit fest in oder an dem Brennofen installiert. Es kann jedoch auch vorgesehen sein, zumindest eine Komponente der Bildleseeinheit - beispielsweise einen Scanner - oder die ganze Bildleseeinheit lösbar - beispielsweise über einen USB-Anschluss - oder sogar drahtlos mit dem Rest der Steuereinheit zu verbinden.

Gemäß einer weiteren Ausführungsform weist die Steuereinheit einen Ausgabeabschnitt aufweist. Durch den Ausgabeabschnitt ist ein Muster ausgebbar, das Informationen bezüglich eines Betriebszustands des Brennofens enthält und/oder das in der Steuereinheit hinterlegte oder gespeicherte Informationen enthält. Das Muster kann beispielsweise ein ein-, zwei- oder dreidimensionaler Code sein, der die genannten Informationen in codierter Form enthält. Der Ausgabeabschnitt ist insbesondere ein Bildschirm oder ein Drucker.

Die Erfindung betrifft ferner ein Verfahren zum Betrieb eines Brennofens zum Brennen von Brenngut, insbesondere zum Brennen von Dentalkeramik. Das Verfahren eignet sich für den Betrieb eines Brennofens gemäß zumindest einer der vorstehend beschriebenen Ausführungsformen. Der Brennofen umfasst eine Steuereinheit mit einem Freigabeabschnitt, der mittels einer individualisierten Steueranweisung, insbesondere mittels eines verschlüsselten Aktivierungscodes, aktivierbar ist. Der Freigabeabschnitt ist derart ausgestaltet, dass in einem aktivierten Zustand des Freigabeabschnitts die Durchführung eines oder mehrerer Brennprozesse möglich ist und dass in einem nicht aktivierten Zustand des Freigabeabschnitts die Durchführung eines Brennprozesses nicht möglich ist. Dem Freigabenabschnitt wird die Steueranweisung zugeführt, um den Freigabeabschnitt zu aktivieren, so dass die Durchführung einer vorbestimmten Anzahl von Brennprozessen freigegeben wird.

Wie bereits vorstehend in Zusammenhang mit dem erfindungsgemäßen Brennofen erläutert wurde, umfasst die Steueranweisung eine gerätespezifische Information bezüglich einer - eventuell prozessparameterabhängigen - Anzahl freigegebener Brennprozesse.

Insbesondere ist die Steuereinheit mit einem Datenfernübertragungsnetz selektiv verbindbar oder im Wesentlichen permanent verbunden. Es kann also vorgesehen sein, dass die Steuereinheit grundsätzlich in ständiger Verbindung mit dem Datenfernübertragungsnetz ist, wenn man von unvorhergesehenen Unterbrechungen und/oder Wartungsunterbrechungen absieht. In vielen Fällen kann es jedoch ausreichend sein, wenn die Steuereinheit nur bei Bedarf automatisch oder manuell in Kontakt mit dem Datenfernübertragungsnetz gebracht wird.

Datenfernübertragungsnetze sind im Kontext der vorliegenden Erfindung jegliche Art drahtgebundener und/oder drahtloser Netze, die die Übertragung von Daten ermöglichen. Dies kann eine Übertragung von Daten innerhalb eines Gebäudes oder über Kontinente hinweg umfassen. Die Datenübertragung kann beispielsweise über lokale Netzwerke (z.B. LAN, WLAN), das Internet und/oder das Mobilfunknetz erfolgen.

Alternativ oder zusätzlich kann vorgesehen sein, dass ein die Steueranweisung enthaltendes Muster mittels einer der Steuereinheit zugeordneten Bildleseeinheit erfasst wird. Die Steueranweisung wird in diesem Fall durch die Steuereinheit und/oder die Bildleseeinheit aus dem Muster extrahiert. Eine solche Bildleseeinheit kann insbesondere bei Brennöfen vorgesehen sein, die nur mit relativ großem Aufwand an ein Datenfernübertragungsnetz anschließbar sind. Es ist jedoch auch möglich, die Bildleseeinheit als redundanten Weg zur Zuführung der Steueranweisung vorzusehen, um auch bei einem unterbrochenen Datenfernübertragungsnetz der Steuereinheit eine Steueranweisung zuführen zu können. Auch eine Möglichkeit zur manuellen Eingabe der Steueranweisung über eine herkömmliche Tastatur oder über einen geeigneten Touchscreen kann vorgesehen sein.

Um sicher zu stellen, dass der Brennofens stets nutzbar ist, kann bei Unterschreiten eines Schwellwerts einer Anzahl noch durchführbarer Brennprozesse bzw. der vorstehend beschriebenen Zählvariable von der Steuereinheit eine Warnung ausgegeben werden und/oder eine Anforderung zur Bereitstellung einer neuen Steueranweisung ausgegeben werden. Mit anderen Worten überwacht die Steuereinheit, ob die Anzahl der freigegebenen Brennprozesse bzw. das entsprechende Guthaben bereits so weit abgeschmolzen ist, dass in näherer Zukunft mit einer Deaktivierung des Freigabeabschnitts zu rechnen ist. Bei der Unterschreitung eines entsprechenden, eventuell durch den Benutzer frei einstellbaren Schwellwerts warnt die Steuereinheit den Benutzer und/oder erzeugt eine Anforderung, mit der eine neue Steueranweisung angefordert werden kann.

Die Anforderung kann beispielsweise über das Datenfernübertragungsnetz an eine Stelle gesandt werden, die die Steueranweisungen verwaltet, ausgibt und/oder generiert. Eine solche Stelle ist insbesondere der Brennofenhersteller und/oder ein Unternehmen, das die entsprechenden Brennöfen vertreibt. Dort wird überprüft, ob der Versender der Anforderung berechtigt ist, eine neue Steueranweisung zu erhalten, mit dem weitere Brennprozesse durchgeführt werden können. Beispielsweise wird überprüft, ob der die Steueranweisung Anfordernde eine bestimmte Gebühr entrichtet hat. Die Steueranweisung kann dann unter Berücksichtigung der Identität des Versenders der Anforderung bzw. eines den entsprechenden Brennofen charakterisieren oder identifizierenden Parameters generiert werden und an den Versender der Anforderung versandt oder anderweitig bereitgestellt werden, z.B. für einen Download. Insbesondere ist die Steueranweisung so ausgestaltet, dass sie nur ein einziges Mal verwendet werden kann.

Weitere Ausführungsformen der Erfindung sind in den Ansprüchen, der Beschreibung und der beigefügten Zeichnung angegeben.

Nachfolgend wird die vorliegende Erfindung rein beispielhaft anhand vorteilhafter Ausführungsformen unter Bezugnahme auf die beigefügte Zeichnung erläutert.

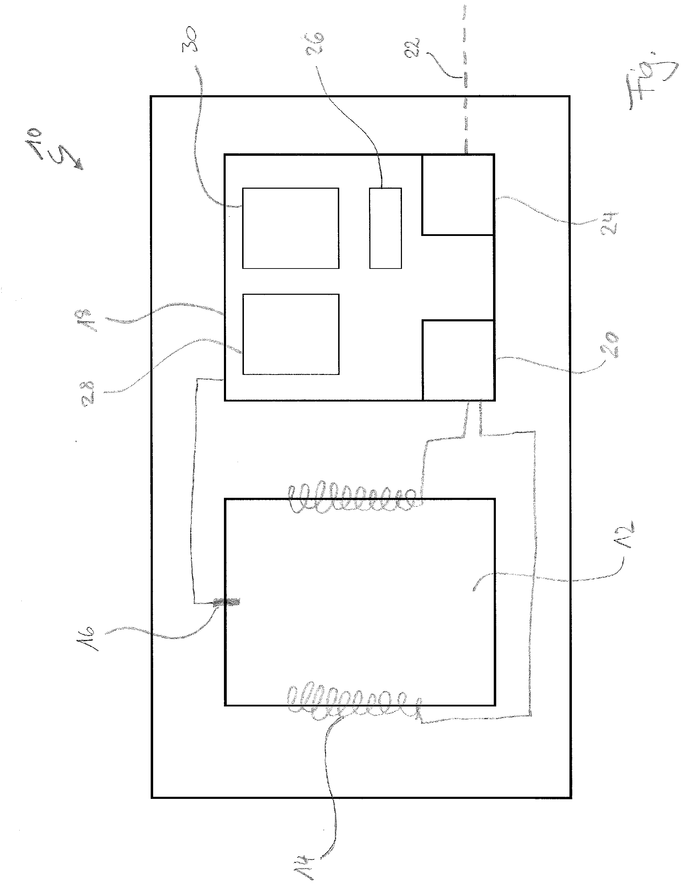

Die einzige Fig. 1 zeigt einen Brennofen 10 mit einer Brennkammer 12, in der das zu brennende Brenngut angeordnet werden kann. Die für den jeweiligen Brennprozess erforderliche Temperatur in der Brennkammer 12 wird durch Heizelemente 14 erzeugt. Die in der Brennkammer 12 herrschende Temperatur wird durch einen Temperaturfühler 16 gemessen.

Die Heizelemente 14 und der Temperaturfühler 16 stehen mit einer Steuereinheit 18 in Verbindung, die den Betrieb des Brennofens 10 steuert. Die Steuereinheit 18 ermöglicht es, verschiedene Brennprozesse durchzuführen, bei denen die Temperatur im Inneren der Brennkammer 12 in der gewünschten Weise zeitabhängig variiert wird. Die zeitliche Variation der Brenntemperatur im Inneren der Brennkammer 12 wird durch sogenannte Brennprogramme festgelegt, die von der Steuereinheit 18 abgearbeitet werden.

Die Steuereinheit 18 umfasst einen Freigabeabschnitt 20, der die Ansteuerung der Heizelemente 14 unterbricht, solange keine gegenteilige Steueranweisung vorliegt. Es ist auch vorstellbar, dass der Freigabeabschnitt 20 an anderer Stelle in den Betrieb des Brennofens 10 eingreift, um die Durchführung von Brennprozessen zuverlässig zu verhindern.

Der Freigabeabschnitt 20 ermöglicht die Ansteuerung der Heizelemente 14 erst, wenn ein entsprechender Aktivierungscode vorliegt. Dieser kann beispielsweise über ein Datenfernübertragungsnetz 22 (DFÜ-Netz) bereitgestellt werden, das über eine Schnittstelle 24 mit der Steuereinheit 18 gekoppelt ist. Unter einem DFÜ-Netz ist in diesem Zusammenhang beispielsweise ein Mobilfunknetz, das Internet und/oder ein lokales Netzwerk - z.B. LAN, WLAN - zu verstehen. Mit anderen Worten können dem Brennofen 10 über eine Netzwerkverbindung beliebiger Ausgestaltung Aktivierungscodes zugeführt werden, die in der Steuereinheit 18 verarbeitet werden, so dass die Durchführung von Brennprozessen möglich ist.

Die Aktivierungscodes sind insbesondere gerätespezifisch, so dass sie lediglich bei ganz bestimmten Geräten die Freigabe weiterer Brennprozesse bewirken, um eine unberechtigte Nutzung der Aktivierungscodes zu verhindern. Die Aktivierungscodes können verschlüsselt sein und grundsätzlich ein beliebiges Daten- bzw. Codierungsformat aufweisen. Bedarfsweise können die Aktivierungscodes neben den gerätespezifischen Informationen auch weitere Informationen enthalten, wie beispielsweise eine Information, die widerspiegelt, wie viele Brennprozesse freigegeben werden sollen.

In diesem Zusammenhang sei darauf hingewiesen, dass es vorgesehen sein kann, bestimmte Parameter der Brennprozesse - z.B. deren Dauer, Temperaturprofil, ... - bei der Dekrementierung des Guthabens zu berücksichtigen. Beispielsweise wird der Freigabeabschnitt durch den Aktivierungscode mit einem Guthaben aufgeladen, von dem für jeden Brennprozess ein individuell bestimmter Wert abgezogen wird, wobei dieser Wert von gewissen Parametern des Brennprozesses abhängt. Dadurch kann ein differenziertes Preismodell geschaffen werden, das die tatsächliche Nutzung des Brennofens genauer berücksichtigt, als eine einfache Zählung von durchgeführten Brennprozessen.

Alternativ oder zusätzlich kann vorgesehen sein, dass die Aktivierungscodes über eine Eingabeeinheit 26, z.B. eine Tastatur, in die Steuereinheit 18 eingegeben werden.

Anstelle der Eingabeeinheit 26 und/oder der Verbindung mit dem DFÜ-Netz 22 oder zusätzlich zu den genannten Komponenten kann ein Bildlesegerät 28 vorgesehen sein, mit dem ein Muster aufgenommen werden kann, das einen Aktivierungscode enthält. Ein solches Muster kann beispielsweise ein Bar-Code oder ein zweidimensionaler Matrix-Code sein. Das Bildlesegerät 28 ist derart ausgestaltet, dass es die in dem Code enthaltenen Informationen auslesen kann. Diese Informationen bilden den Aktivierungscode zur Aktivierung des Freigabeabschnitts 20.

Beispielsweise bestellt ein Nutzer den Aktivierungscode auf mündlichem, schriftlichem oder elektronischem Wege, um den Brennofen 10 nutzen zu können. Nach Überprüfung der Berechtigung zur Nutzung des Brennofens 10, die beispielsweise durch Zahlung einer Nutzungsgebühr erwerbbar ist, wird dem Nutzer ein zweidimensionaler QR-Code bereitgestellt, der diesen in gedruckter Form oder als Darstellung auf einem Bildschirm, beispielsweise auf einem Bildschirm eines Mobiltelefons, vor das Bildlesegerät 28 hält. Das Bildlesegerät 28 nimmt den QR-Code auf und extrahiert den darin enthaltenen Aktivierungscode, der wiederum dem Freigabeabschnitt 20 zugeleitet wird, woraufhin dieser eine Bestromung der Heizelemente 14 zulässt. Der QR-Code kann auf postalischem oder elektronischem Wege - etwa als Bilddatei per e-mail oder über einen aufzurufenden Internetlink - bereitgestellt werden.

Bei dieser Vorgehensweise ist es nicht erforderlich, dass der Brennofen 10 mit dem DFÜ-Netz 22 verbunden ist, was in der Regel mit Kosteneinsparung verbunden ist. Im Gegensatz dazu ermöglicht eine Verbindung des Brennofens 10 mit dem DFÜ-Netz 22 eine direkte Einspeisung der Aktivierungscodes in die Steuereinheit 18. Die Bestellung der Aktivierungscodes kann analog zu der in Zusammenhang mit dem Bildlesegerät 28 beschriebenen Art und Weise erfolgen. Gleiches gilt für die Bestellung von über die Eingabeeinheit 26 einzugebenden Aktivierungscodes.

Mittels des Freigabeabschnitts 20 ist es - unabhängig von der Ausgestaltung des Aktivierungscodes und/oder dessen Übertragungswegs - möglich, die verschiedensten Nutzungs- und Gebührenkonzepte zu realisieren. Beispielsweise wird der Brennofen 10 für einen bestimmten Grundpreis an einen Kunden verkauft. Der Kunde bezahlt ferner in bestimmten Abständen, beispielsweise monatlich, eine Grundgebühr und erhält dafür die Möglichkeit, eine gewisse Anzahl von Brennprozessen durchzuführen. Falls die durch die Grundgebühr abgedeckte Anzahl von Brennprozessen durchgeführt wurde, erkennt dies der Freigabeabschnitt 20 und blockiert die Durchführung weiterer Brennprozesse. Der Kunde kann nun die Berechtigung zur Durchführung eines weiteren Brennprozesses oder einer bestimmten Anzahl von Brennprozessen käuflich erwerben. Zu diesem Zweck wendet er sich an den Hersteller des Brennofens 10 oder dessen Vertriebspartner und bestellt telefonisch, schriftlich oder auf elektronischem Wege einen Aktivierungscode zur Freischaltung des Brennofens 10.

Grundsätzlich ist es auch möglich, eine Berechtigung für weitere Brennprozesse bereits vor einer Blockierung zu erwerben. Insbesondere sind die Steuereinheit 18 und/oder der Freigabeabschnitt 20 derart ausgestaltet, dass erkannt wird, sobald die freigegebene Anzahl von Brennprozessen fast aufgebraucht ist, so dass rechtzeitig ein neuer Aktivierungscode angefordert werden kann. Die Anforderung kann manuell oder sogar automatisch erfolgen. Beispielsweise gibt die Steuereinheit 18 eine Warnung aus, die den Benutzer veranlasst, einen neuen Aktivierungscode anzufordern. Grundsätzlich ist es aber auch möglich, dass die Steuereinheit 18 bei einer Anbindung an das DFÜ-Netz 22 automatisch eine Anforderung versendet, woraufhin ein geeigneter Aktivierungscode generiert und an den Benutzer oder sogar gleich an die Steuereinheit 18 versandt wird. Bei der Generierung des Aktivierungscodes wird beispielsweise dem Benutzer ein bestimmter Betrag in Rechnung gestellt. Es kann jedoch auch vorgesehen sein, dass vor der Generierung des Aktivierungscodes zunächst bei dem Benutzer um Bestätigung der automatisch erstellten Anforderung gebeten wird.

Dem Kunden kann beispielsweise auch ein QR-Code zugesandt oder bereitgestellt, der einen Aktivierungscode enthält. Der QR-Code wird durch das Bildlesegerät 28 aufgenommen und ausgewertet. D.h. der in dem QR-Code enthaltene Aktivierungscode wird extrahiert und dann dem Freigabeabschnitt 20 zugeleitet. Sobald der Aktivierungscode dem Freigabeabschnitt 20 zugeführt und von diesem mit positivem Ergebnis überprüft wurde, wird der Freigabeabschnitt 20 aktiviert, so dass die Durchführung einer bestimmten Anzahl von Brennprozessen zugelassen wird. Beispielsweise wird der Aktivierungscode ganz spezifisch für einen bestimmten Brennofen 10 generiert, sodass er nur bei diesem Brennofen 10 eine Aktivierung des Freigabeabschnitts 20 und damit eine Freischaltung des Brennofens 10 bewirkt.

Beispielsweise wird der QR-Code auf einer bestimmten Internetseite bereitgestellt, die dann ausgedruckt und vor das Bildlesegerät 28 gehalten werden kann. Es ist auch möglich, diese Internetseite mittels eines geeigneten Mobiltelefons, eines Tablet-Computers oder eines ähnlichen Geräts aufzurufen und den dort hinterlegten QR-Code auf dem Bildschirm des entsprechenden Geräts anzuzeigen. Der Bildschirm wird dann vor das Bildlesegerät 28 gehalten und der darauf dargestellte QR-Code wird von diesem erfasst. Auch ein direkter Versand des QR-Codes - z.B. als Bilddatei - an das Gerät ist denkbar.

Bei einer Anbindung des Brennofens 10 an das DFÜ-Netz 22 sind ebenfalls verschiedenste Wege zur Übertragung eines Aktivierungscodes auf die Steuereinheit 18 denkbar. Beispielsweise kann über eine in den Brennofen 10 integrierte UMTS- bzw. Mobilfunk-Schnittstelle drahtlos eine direkte Freischaltung erfolgen. Es kann auch ein USB-Anschluss vorgesehen sein, über den eine externe Schnittstelle - beispielsweise ein geeignetes Mobiltelefon, ein Tablet-Computer oder ein ähnliches Gerät - mit der Steuereinheit 18 verbindbar ist. Der Kunde wählt dann eine bestimmte Telefonnummer - beispielsweise eine ofenspezifische Telefonnummer - an und über die so hergestellte Verbindung wird der Aktivierungscode übermittelt. Die Übermittlung erfolgt insbesondere automatisch.

Zusätzlich oder alternativ zu den vorstehend beschriebenen Komponenten kann der Brennofen 10 mit einer Anzeigeeinheit 30 versehen sein. Auf der Anzeigeeinheit 30 werden beispielsweise die Betriebsparameter des Brennofens 10 angezeigt. Die Anzeigeeinheit 30 kann aber auch genutzt werden, um einen Code, beispielsweise einen QR-Code, darzustellen, der beispielsweise abfotografiert und anschließend weitergeleitet werden kann. Beispielsweise enthält der dargestellte Code eine Fehlerinformation, die zur Analyse einer Fehlfunktion des Brennofens 10 genutzt werden kann. Die dargestellte Information kann auch andere Informationen enthalten, wie beispielsweise einen Inhalt eines Speichers der Steuereinheit 18, um die entsprechenden Informationen sichern oder anderweitig nutzen zu können. Der Code kann auch mit Hilfe eines Druckers ausgegeben werden.

Es versteht sich, dass der Steuereinheit 18 auf die vorstehend beschriebenen unterschiedlichen Arten anstelle oder zusätzlich zu den Aktivierungscodes auch Brennprogramme zur Verfügung gestellt werden können, die beispielsweise in einer Datenbank hinterlegt sind.

Um Missbrauch zu verhindern, ist der Freigabeabschnitt 20 besonders gegen Manipulationen gesichert. Der Freigabeabschnitt 20 kann grundsätzlich durch ein Software-Modul gebildet sein, das von einem Prozessor der Steuereinheit 18 ausgeführt wird. Der Freigabeabschnitt 20 kann jedoch auch ein spezifisches Hardwarebauteil sein. Eine Hardware/ Software-Kombination zur Realisierung des Freigabeabschnitts 20 ist ebenfalls möglich.

### Bezugszeichenliste

- 10: Brennofen
- 12: Brennkammer
- 14: Heizelement
- 16: Temperaturfühler
- 18: Steuereinheit
- 20: Freigabeabschnitt
- 22: Datenfernübertragungsnetz
- 24: Schnittstelle
- 26: Eingabeeinheit
- 28: Bildlesegerät
- 30: Anzeigeeinheit

## Patentansprüche

1. Verfahren zum Betrieb eines Brennofens zum Brennen von Brenngut mit einer Steuereinheit (18) zur Steuerung des Brennofens, wobei die Steuereinheit (18) einen Freigabeabschnitt (20) aufweist, der mittels einer individualisierten Steueranweisung, insbesondere mittels eines verschlüsselten Aktivierungscodes, aktivierbar ist, wobei der Freigabeabschnitt (20) derart ausgestaltet ist, dass in einem aktivierten Zustand des Freigabeabschnitts (20) die Durchführung eines oder mehrerer Brennprozesse möglich ist und dass in einem nicht aktivierten Zustand des Freigabeabschnitts (20) die Durchführung eines Brennprozesses nicht möglich ist, wobei dem Freigabenabschnitt (20) die Steueranweisung zugeführt wird, um den Freigabeabschnitt (20) zu aktivieren, so dass die Durchführung einer vorbestimmten Anzahl von Brennprozessen freigegeben wird, wobei die Steueranweisung eine gerätespezifische Information bezüglich einer Anzahl freigegebener Brennprozesse umfasst.

2. Verfahren nach Anspruch 1,
**dadurch gekennzeichnet, dass**
die Steuereinheit (18) mit einem Datenfernübertragungsnetz (22) selektiv verbindbar ist oder im Wesentlichen permanent verbunden ist, wobei die Steueranweisung dem Freigabeabschnitt (20) über das Datenfernübertragungsnetz (22) zugeführt wird.

3. Verfahren nach Anspruch 1 oder 2,
**dadurch gekennzeichnet, dass**
ein die Steueranweisung enthaltendes Muster mittels einer der Steuereinheit (18) zugeordneten Bildleseeinheit (28) erfasst wird und dass die Steueranweisung durch die Steuereinheit (18) und/oder die Bildleseeinheit (28) aus dem Muster extrahiert wird.

4. Verfahren nach zumindest einem der Ansprüche 1 bis 3,
**dadurch gekennzeichnet, dass**
bei Unterschreiten eines Schwellwertes einer Anzahl von noch durchführbaren Brennprozessen von der Steuereinheit (18) eine Warnung ausgegeben wird und/oder eine Anforderung zur Bereitstellung einer neuen Steueranweisung ausgegeben wird.

5. Verfahren nach zumindest einem der Ansprüche 1 bis 4,
**dadurch gekennzeichnet, dass**
die Steueranweisung erst auf Anforderung und nach Überprüfung der Anforderung, insbesondere automatisch generiert wird und dem Freigabeabschnitt (22) - direkt oder indirekt - zugeführt wird.

6. Verfahren nach zumindest einem der Ansprüche 1 bis 5,
**dadurch gekennzeichnet, dass**
eine Anforderung zur Bereitstellung einer Steueranweisung, insbesondere automatisch, über ein Datenfernübertragungsnetz (22) zur Überprüfung, ob eine Berechtigung besteht, eine Steueranweisung zu erhalten, an eine Steueranweisungen ausgebende und/oder generierende Stelle gesandt wird.

7. Verfahren nach Anspruch 6,
**dadurch gekennzeichnet, dass**
die Steueranweisung derart generiert wird, dass sie nur einmal verwendbar ist.

8. Brennofen zur Ausführung des Verfahrens nach zumindest einem der Ansprüche 1 bis 7,
insbesondere zum Brennen von Dentalkeramik, mit einer Steuereinheit (18) zur Steuerung des Brennofens, wobei die Steuereinheit (18) einen Freigabeabschnitt (20) aufweist, der mittels einer individualisierten Steueranweisung, insbesondere mittels eines verschlüsselten Aktivierungscodes, aktivierbar ist, wobei der Freigabeabschnitt (20) derart ausgestaltet ist, dass in einem aktivierten Zustand des Freigabeabschnitts (20) die Durchführung eines oder mehrerer Brennprozesse möglich ist und dass in einem nicht aktivierten Zustand des Freigabeabschnitts (20) die Durchführung eines Brennprozesses nicht möglich ist, wobei die Steueranweisung eine gerätespezifische Information bezüglich einer vorbestimmten Anzahl freigegebener Brennprozesse umfasst.

9. Brennofen nach Anspruch 8,
**dadurch gekennzeichnet, dass**
die Steuereinheit (18) derart mit einem Datenfernübertragungsnetz (22) verbindbar ist, dass die Steueranweisung dem Freigabeabschnitt (20) über das Datenfernübertragungsnetz (22) zuführbar ist.

10. Brennofen nach Anspruch 8 oder 9,
**dadurch gekennzeichnet, dass**
die Steuereinheit (18) eine Bildleseeinheit (28) aufweist, mit der ein die Steueranweisung umfassendes Muster erfassbar ist und mit der die Steueranweisung aus dem Muster extrahierbar ist.

11. Brennofen nach zumindest einem der Ansprüche 8 bis 10,
**dadurch gekennzeichnet, dass**
die Steuereinheit (18) einen Ausgabeabschnitt (30) aufweist, durch den ein Muster, insbesondere ein zweidimensionales Muster, ausgebbar ist, das Informationen bezüglich eines Betriebszustandes des Brennofens enthält und/oder das in der Steuereinheit (18) hinterlegte Informationen enthält.

## Claims

1. A method of operating a furnace for firing products to be fired, comprising a control unit (18) for controlling the furnace, wherein the control unit (18) has an enabling section (20) which can be activated by means of an individualized control instruction, in particular by means of an encoded activation code; wherein the enabling section (20) is configured such that, in an activated state of the enabling section (20), the carrying out of one or more firing processes is possible and such that, in a non-activated state of the enabling section (20), the carrying out of a firing process is not possible; wherein the control instruction is supplied to the enabling section (20) to activate the enabling section (20) such that the carrying out of a predefined number of firing processes is enabled; and wherein the control instruction comprises device-specific information with respect to a number of enabled firing processes.

2. A method in accordance with claim 1,
**characterized in that**
the control unit (18) is selectively connectable or is essentially permanently connected to a remote data transmission network (22), with the control instruction being supplied to the enabling section (20) via the remote data transmission network (22).

3. A method in accordance with claim 1 or claim 2,
**characterized in that**
a pattern comprising the control instruction is detected by means of an image reading unit (28) associated with the control unit (18); and **in that** the control instruction is extracted from the pattern by the control unit (18) and/or by the image reading unit (28).

4. A method in accordance with at least one of the claims 1 to 3,
**characterized in that**,
when falling short of a threshold value of a number of firing processes which can still be carried out, a warning is output by the control unit (18) and/or a request for a provision of a new control instruction is output.

5. A method in accordance with at least one of the claims 1 to 4,
**characterized in that**
the control instruction is generated, in particular automatically, and is supplied to the enabling section (22) - directly or indirectly - only on request and after checking of the request.

6. A method in accordance with at least one of the claims 1 to 5,
**characterized in that**
a request for the provision of a control instruction is sent, in particular automatically, to a location outputting and/or generating control instructions via a remote data transmission network (22) to check whether there is an authorization to receive a control instruction.

7. A method in accordance with claim 6,
**characterized in that**
the control instruction is generated such that it can only be used once.

8. A furnace for carrying out the method in accordance with at least one of the claims 1 to 7,
in particular for firing dental ceramics, comprising a control unit (18) for controlling the furnace, wherein the control unit (18) has an enabling section (20) which can be activated by means of an individualized control instruction, in particular by means of an encoded activation code; wherein the enabling section (20) is configured such that, in an activated state of the enabling section (20), the carrying out of one or more firing processes is possible and such that, in a non-activated state of the enabling section (20), the carrying out of a firing process is not possible; and wherein the control instruction comprises device-specific information with respect to a predefined number of enabled firing processes.

9. A furnace in accordance with claim 8,
**characterized in that**
the control unit (18) is connectable to a remote data transmission network (22) such that the control instruction can be supplied to the enabling section (20) via the remote data transmission network (22).

10. A furnace in accordance with claim 8 or claim 9,
**characterized in that**
the control unit (18) has an image reading unit (28) with which a pattern comprising the control instruction can be detected and with which the control instruction can be extracted from the pattern.

11. A furnace in accordance with at least one of the claims 8 to 10,
**characterized in that**
the control unit (18) has an output section (30) by which a pattern, in particular a two-dimensional pattern, can be output which includes information with respect to an operating state of the furnace and/or which includes information stored in the control unit (18).

## Revendications

1. Procédé de fonctionnement d'un four de cuisson pour la cuisson d'un matériau à cuire, comportant une unité de commande (18) pour la commande du four de cuisson,
dans lequel
l'unité de commande (18) comporte une section de validation (20) qui peut être activée à l'aide d'une instruction de commande individualisée, en particulier d'un code d'activation chiffré,
la section de validation (20) est conçue de telle sorte que, dans un état activé de la section de validation (20), l'exécution d'un ou de plusieurs processus de cuisson est possible et que, dans un état non activé de la section de validation (20), l'exécution d'un processus de cuisson n'est pas possible, l'instruction de commande est transmise à la section de validation (20) afin d'activer la section de validation, de sorte que l'exécution d'un nombre prédéterminé de processus de cuisson est validée,
l'instruction de commande comprend une information spécifique au dispositif relative à un certain nombre de processus de cuisson validés.

2. Procédé selon la revendication 1,
**caractérisé en ce que**
l'unité de commande (18) peut être connectée de manière sélective ou sensiblement permanente à un réseau de transmission de données à distance (22), l'instruction de commande étant transmise à la section de validation (20) par le réseau de transmission de données à distance (22).

3. Procédé selon la revendication 1 ou 2,
**caractérisé en ce que**
un motif contenant l'instruction de commande est détecté à l'aide d'une unité de lecture d'image (28) associée à l'unité de commande (18), et **en ce que**
l'instruction de commande est extraite hors du motif par l'unité de commande (18) et/ou par l'unité de lecture d'image (28).

4. Procédé selon l'une au moins des revendications 1 à 3,
**caractérisé en ce que**
lorsqu'on passe au-dessous d'une valeur seuil d'un certain nombre de processus de cuisson encore exécutables, l'unité de commande (18) émet un avertissement et/ou une demande de mise à disposition d'une nouvelle instruction de commande.

5. Procédé selon l'une au moins des revendications 1 à 4,
**caractérisé en ce que**
l'instruction de commande est générée, en particulier automatiquement, uniquement sur demande et après vérification de la demande, et est transmise directement ou indirectement à la section de validation (22).

6. Procédé selon l'une au moins des revendications 1 à 5,
**caractérisé en ce que**
une demande de mise à disposition d'une instruction de commande est envoyée, en particulier automatiquement, à une unité d'émission et/ou de génération d'instruction de commande via un réseau de transmission de données à distance (22) pour vérifier s'il existe une autorisation de recevoir une instruction de commande.

7. Procédé selon la revendication 6,
**caractérisé en ce que**
l'instruction de commande est générée de telle sorte qu'elle ne peut être utilisée qu'une seule fois.

8. Four de cuisson pour mettre en oeuvre le procédé selon l'une au moins des revendications 1 à 7,
destiné en particulier à la cuisson de céramique dentaire, comportant une unité de commande (18) pour la commande du four de cuisson,
dans lequel
l'unité de commande (18) comporte une section de validation (20) qui peut être activée à l'aide d'une instruction de commande individualisée, en particulier d'un code d'activation chiffré,
la section de validation (20) est conçue de telle sorte que, dans un état activé de la section de validation (20), l'exécution d'un ou de plusieurs processus de cuisson est possible et que, dans un état non activé de la section de validation (20), l'exécution d'un processus de cuisson n'est pas possible, l'instruction de commande comprend une information spécifique au dispositif relative à un nombre prédéterminé de processus de cuisson validés.

9. Four de cuisson selon la revendication 8,
**caractérisé en ce que**
l'unité de commande (18) peut être connectée à un réseau de transmission de données à distance (22) de telle sorte que l'instruction de commande peut être transmise à la section de validation (20) par le réseau de transmission de données à distance (22).

10. Four de cuisson selon la revendication 8 ou 9,
**caractérisé en ce que**
l'unité de commande (18) comprend une unité de lecture d'image (28) permettant de détecter un motif contenant l'instruction de commande et d'extraire l'instruction de commande hors du motif.

11. Four de cuisson selon l'une au moins des revendications 8 à 10,
**caractérisé en ce que**
l'unité de commande (18) comprend une section d'émission (30) permettant d'émettre un motif, en particulier un motif bidimensionnel qui contient des informations relatives à un état de fonctionnement du four de cuisson et/ou des informations stockées dans l'unité de commande (18).
